(19) **Europäisches Patentamt / European Patent Office / Office européen des brevets**

(11) **EP 3 948 436 B1**

(12) # FASCICULE DE BREVET EUROPEEN

(45) Date de publication et mention de la délivrance du brevet:
**04.06.2025 Bulletin 2025/23**

(21) Numéro de dépôt: **20715077.2**

(22) Date de dépôt: **02.04.2020**

(51) Classification Internationale des Brevets (IPC):
**G05B 9/03** (2006.01)     **B64D 31/00** (2024.01)

(52) Classification Coopérative des Brevets (CPC):
**G05B 9/03;** B64D 31/00; G05B 2219/24175;
G05B 2219/24182; G05B 2219/24184

(86) Numéro de dépôt international:
**PCT/EP2020/059454**

(87) Numéro de publication internationale:
**WO 2020/201454 (08.10.2020 Gazette 2020/41)**

(54) **PROCÉDÉ DE COMMANDE D'UN MOTEUR D'UN AÉRONEF COMMANDÉ PAR UN DISPOSITIF DE COMMANDE COMPRENANT DEUX VOIES DE COMMANDE REDONDÉES**

VERFAHREN ZUR STEUERUNG EINES VON EINER STEUERVORRICHTUNG GESTEUERTEN FLUGZEUGMOTORS MIT ZWEI REDUNDANTEN STEUERKANÄLEN

METHOD FOR CONTROLLING AN AIRCRAFT ENGINE CONTROLLED BY A DEVICE COMPRISING TWO REDUNDANT CONTROL CHANNELS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.04.2019 FR 1903675**

(43) Date de publication de la demande:
**09.02.2022 Bulletin 2022/06**

(73) Titulaire: **SAFRAN AIRCRAFT ENGINES**
**75015 Paris (FR)**

(72) Inventeurs:
• **MARTIN, Christophe, Pierre, Georges**
**77550 MOISSY-CRAMAYEL (FR)**
• **SOULIE, Sébastien, Jacques, François, Michel**
**77550 MOISSY-CRAMAYEL (FR)**

(74) Mandataire: **Regimbeau**
**20, rue de Chazelles**
**75847 Paris Cedex 17 (FR)**

(56) Documents cités:
**EP-A1- 0 724 218     CN-A- 108 536 004**
**FR-A1- 2 734 925     FR-A1- 2 986 398**
**FR-A1- 3 033 403     FR-A1- 3 038 709**

• **OLAND ESPEN ET AL: "A Comparative Study of Different Control Structures for Flight Control With New Results", IEEE TRANSACTIONS ON CONTROL SYSTEMS TECHNOLOGY, IEEE SERVICE CENTER, NEW YORK, NY, US, vol. 28, no. 2, 24 October 2018 (2018-10-24), pages 291 - 305, XP011773489, ISSN: 1063-6536, [retrieved on 20200213], DOI: 10.1109/TCST.2018.2873507**

EP 3 948 436 B1

## EP 3 948 436 B1

**Description**

DOMAINE TECHNIQUE GENERAL

L'invention concerne un procédé de commande des moteurs d'aéronef de type turboréacteur. Elle concerne plus particulièrement un procédé mettant en œuvre des calculs redondés à partir de mesures issues de capteurs configurés pour mesurer des paramètres du moteur.

ETAT DE LA TECHNIQUE

Un turboréacteur est classiquement équipé d'un dispositif de commande qui assure aussi une protection contre des événements dont les conséquences sont hazardous (redoutés) ou catastrophique tels que des cas de survitesse du moteur. Ainsi, un seul et même dispositif met en œuvre ces deux fonctions.

Un tel dispositif de commande comprend généralement deux voies identiques qui permettent de redonder l'acquisition de paramètres et le calcul de consigne pour commander un ou plusieurs actionneur(s).

Les voies sont idéalement indépendantes l'une de l'autre mais souvent, elles échangent des informations afin de permettre une consolidation des mesures, comme par exemple dans le document FR 2 986 398 A1. L'objectif de la consolidation est de faire en sorte que les deux voies fassent les mêmes calculs au même moment dans le but d'assurer la redondance tiède du dispositif de commande : une voie est active et commande des actionneurs et une voie est passive et est prête à chaque instant à devenir active dans le cas où une défaillance surviendrait sur le système. En effet, une défaillance sur une voie peut conduire à des évènements hazardous ou catastrophiques.

Dans le cas où la commande du moteur et la protection contre ces évènements sont assurés par le même dispositif, il est nécessaire de prévoir une surveillance des processeurs effectuant les calculs pour s'assurer qu'ils ne sont pas défaillants. En effet, une défaillance du processeur peut déclencher un départ en survitesse du moteur.

Une telle surveillance est mise en œuvre en comparant les résultats des calculs de chacune des voies, une voie dite active commandes les actionnant (par exemple les géométries variables et/ou doseurs de carburant du moteur). En cas de divergence entre les calculs, la voie passive est désactivée et le dispositif de commande devient monovoie.

Un problème est qu'en comparant seulement les résultats des calculs sur chacune des voies, il n'est pas possible de discriminer une défaillance du processeur ou un problème d'échange entre les voies.

En effet, une coupure de la liaison inter voie, même fugitive, stoppe la surveillance mutuelle et oblige à sécuriser le système car cela peut engendrer une différence de calculs. La sécurisation consiste à isoler la voie passive pour le reste de la mission, pénalisant ainsi la disponibilité de la redondance pour la mission et la disponibilité des calculateurs en maintenance pour assurer la recherche des problèmes.

De ce fait la voie écartée peut être la voie saine car lors d'un problème de communication, on ne sait pas dire si l'erreur est localisée sur la voie émettrice ou réceptrice. Si la voie restante est défaillante et que cette défaillance est détectable par des autotests hardware, elle finit par s'isoler également conduisant alors à l'extinction du moteur. Ce type de comportement pénalise donc le taux d'arrêt en vol du moteur.

PRESENTATION DE L'INVENTION

L'objet de l'invention consiste donc à rendre plus robuste (c'est-à-dire résistant) le système aux pertes de liaison inter voie pour permettre de localiser les anomalies de façon sûre et ainsi assurer que seule la voie défaillante s'isole.

A cet effet, l'invention propose un procédé selon la revendication 1.

L'invention est avantageusement complétée par les caractéristiques suivantes, prises seules ou en une quelconque de leur combinaison techniquement possible

- chaque voie comprend en outre une unité de surveillance des processus configurée pour détecter une différence de la valeur de la commande calculée par les deux voies
- l'unité de surveillance des processus est configurée pour désactiver temporairement ou définitivement la voie passive dans le cas où une différence de la valeur de la commande calculée par les deux voies est détectée.
- l'unité de consolidation effectue une moyenne des valeurs mesurées par les deux voies.
- l'unité de traitement de chaque voie effectue un calcul nécessitant au moins un résultat calculé par elle-même à un pas de temps antérieur.
- l'unité de traitement de chaque voie effectue un calcul nécessitant au moins un résultat intermédiaire calculé par elle-même à un pas de calcul antérieur.
- le mode de fonctionnement dégradé est activé pendant une durée correspondant à la durée de la coupure de l'au moins une liaison de communication inter-voie.
- le mode de fonctionnement dégradé est activé pendant une durée correspondant au temps entre le calcul d'une

2

valeur intermédiaire et l'instant de temps le plus éloigné durant lequel un calcul utilise cette valeur comme donnée initiale.

- le mode de fonctionnement dégradé est activé pendant une durée prédéterminée, estimée par des tests de panne de liaison de communication.
- l'unité de surveillance des processus est configurée pour désactiver définitivement la voie passive dans le cas où une différence dans la valeur de la commande calculée par les deux voies est détectée immédiatement après la fin du mode de fonctionnement dégradé.
- lorsque l'une des deux voies attend de recevoir des mesures provenant de l'autre voie, ladite autre voie réalise à l'avance les prochains calculs prévus ne nécessitant pas de mesure provenant de la seconde voie dont elle ne dispose pas à cet instant. Les avantages de l'invention sont multiples.

La disponibilité de la redondance en augmentant la robustesse de la liaison aux défaillances fugitives. Cela contribue à améliorer également la disponibilité de la protection face aux risques catastrophiques et hazardous.

La disponibilité des calculateurs en maintenance en facilitant la recherche de pannes ainsi qu'en diminuant la proportion de calculateurs avec des pannes non confirmées ou de calculateurs déposés à tort.

Le taux d'arrêt moteur en vol lié à une défaillance de l'une des deux voies du dispositif de commande.

PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :

- la figure 1 illustre un exemple de dispositif de commande d'un moteur comportant deux voies selon un mode de réalisation de l'invention :
- la figure 2 illustre un exemple de réalisation d'une unité de traitement du dispositif de commande selon l'invention ;
- les figures 3 à 5 illustrent schématiquement des étapes de traitement mises en œuvre dans le dispositif de commande.

Sur l'ensemble des figures les éléments similaires portent des références identiques.

DESCRIPTION DETAILLEE DE L'INVENTION

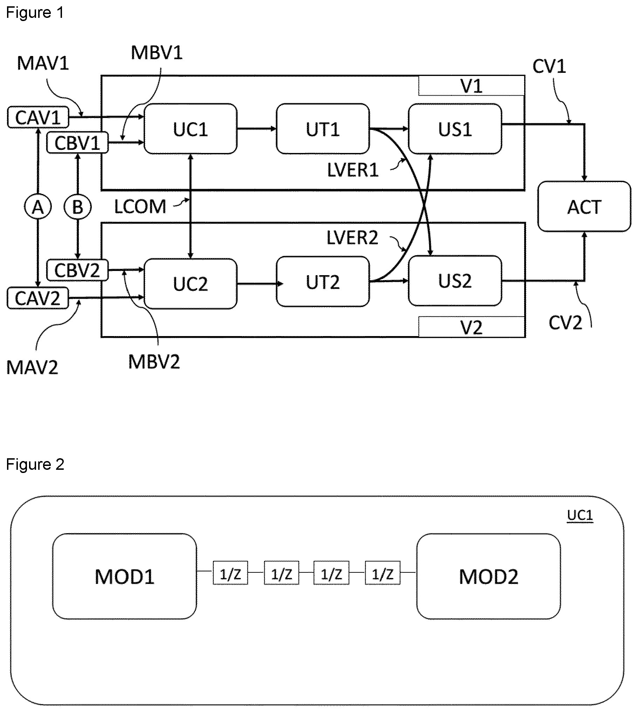

On a illustré sur la **figure 1** un dispositif de commande d'un moteur selon un mode de réalisation de l'invention. Le moteur est de préférence celui d'un aéronef tel qu'une turbomachine.

Le dispositif de commande comprend deux voies de commande : une première voie de commande V1 et une deuxième voie de commande V2.

Chaque voie de commande V1, V2 permet de piloter au moins un actionneur ACT en fonction d'une commande ou consigne calculée $C_{V1}$, $C_{V2}$. En fonctionnement une seule des deux voies pilote l'actionneur ACT, il s'agit de la voie active. L'autre voie est considérée comme passive et permet de prendre le relais sur la voie active en cas de défaillance de ladite voie active.

Chaque voie de commande V1, V2 reçoit en entrée des grandeurs A, B à mesurer à partir desquelles la commande de l'actionneur ACT est calculée. Ces grandeurs sont par exemple : température, etc.

Dans l'exemple illustré sur la figure 1, chaque voie reçoit chacune deux grandeurs différentes A, B à mesurer, chaque voie mesurant les mêmes grandeurs. En particulier, pour chaque voie V1, V2 ces grandeurs sont mesurées par des capteurs différents ou identiques :

- Pour la première voie V1 : une première mesure MAV1 de la première grandeur A est mesurée par un premier capteur CAV1 et une deuxième mesure MBV1 d'une deuxième grandeur B est mesurée par un deuxième capteur CBV1
- Pour la deuxième voie V2 : une première mesure MAV2 de la première grandeur A est mesurée par un premier capteur CAV2 et une deuxième mesure MBV2 de la deuxième grandeur B est mesurée par un deuxième capteur CBV2.

Les capteurs utilisés dépendent des grandeurs mesurées : un capteur de température pour la température etc.

Afin de déterminer une commande $C_{V1}$, $C_{V2}$ chaque voie va effectuer un certain nombre de traitement sur les mesures effectuées.

En particulier, chaque voie comprend une unité de consolidation UC1, UC2 permettant d'unifier les données mesurées par les capteurs de chacune des deux voies par un processus de consolidation, par exemple en effectuant une moyenne des valeurs mesurées par les capteurs de chacune des deux voies.

Comme on l'aura compris, il y a un échange de données entre les voies V1, V2 au moyen d'une liaison de communication inter-voie LCOM.

Pour chaque voie, le résultat de la consolidation est alors utilisé par une unité de traitement UT1, UT2 qui va calculer les consignes $C_{V1}$, $C_{V2}$ pour l'actionneur ACT. De manière avantageuse, l'unité de traitement UT1, UT2 peut utiliser comme données d'entrée les commandes calculés à un ou plusieurs instants de calculs précédents ainsi que des résultats intermédiaires calculées à un ou plusieurs instants de calculs précédents. Dans ce cas, l'unité de traitement peut comprendre un premier module MOD1 de calcul et un deuxième module de calcul MOD2 : l'un d'eux réalise la première partie des calculs, et le second réalise les calculs nécessitant les calculs intermédiaires réalisés précédemment (voir **figure 2**). Les données issues du premier module sont récupérées par le deuxième module avec un retard, typiquement de 1 à 4 instants de calcul.

En fonctionnement nominal, les consignes $C_{V1}$, $C_{V2}$ calculées par chacune des voies sont identiques. Pour s'assurer que c'est bien le cas, chaque voie comprend également une unité de surveillance US1, US2, chargée de vérifier que les commandes $C_{V1}$, $C_{V2}$ calculées sont bien identiques. Afin de pouvoir réaliser cette comparaison des commandes calculées, l'unité de surveillance US1, US2 reçoit les commandes calculés par la voie à laquelle elle appartient, ainsi que celle calculées par l'autre voie via une liaison de communication LVER2, LVER1.

Lorsqu'une différence est détectée entre les deux commandes calculées $C_{V1}$, $C_{V2}$ des mécanismes d'autotests des unités de traitement UT1, UT2 permettent d'identifier d'où peuvent venir les erreurs et désactiver une des voies qui dans ce cas ne remonte pas d'informations vers l'autre voie. Dans ce cas, il est possible de sélectionner la voie qui sera à l'état « actif » ou à l'état « passif » et de désactiver celle qui est à l'état « passif ».

En effet, comme déjà indiqué en introduction, on note que les voies de commande V1, V2 disposent chacune d'un indicateur d'état « actif » ou « passif ». Celui-ci permet de déterminer quelle voie contrôle de manière effective le ou les actionneur(s) ACT du moteur. Ces états sont exclusifs : les deux voies V1, V2 ne peuvent pas être dans le même état, l'une doit être active et l'autre passive.

En revanche, si la source de l'erreur n'est pas détecté par les mécanismes d'autotests des unités de traitement, la voie passive est toujours désactivée. La redondance assurée par celle-ci est alors perdue. Comme on l'aura compris, il est dans ce cas possible de désactiver une voie alors qu'elle ne présente pas de problème, le problème pouvant venir de l'au moins une liaison de communication inter-voie LCOM.

En conséquence, plutôt que de désactiver la voie passive et en supposant que le problème vienne de la liaison de communication inter-voie LCOM, le dispositif de commande va présenter un mode de fonctionnement dégradé selon lequel on va procéder à une transmission des commandes calculées par les unités de traitement UT1, UT2. En particulier, cette transmission est réalisée de la voie active vers la voie passive. Elle permet lorsque les calculs réalisés par l'unité de traitement reposent sur des résultats calculés à un pas de temps précèdent d'unifier les données d'entrée des unités de calculs des deux voies afin de permettre la convergence des commandes au bout d'un certain nombre de pas de temps.

De manière avantageuse, pour une unité de traitement le temps de calcul est fixé à une durée t, par exemple comprise entre 5 et 50 ms, typiquement t = 15ms, qui est limitée et le dépassement de cette durée engendre une exception de l'unité de traitement et la désactivation de la voie concernée par l'exception. Il est donc nécessaire d'être vigilant à la charge de calcul exécutée sur l'unité de traitement. En cas de coupure de la communication entre les voies V1, V2, il est nécessaire, au rétablissement de la liaison de communication LCOM inter-voie, de suivre les mécanismes de transmission des commandes calculées pour assurer la reconvergence des calculs. Ceci engendre une surcharge de calcul de l'unité de traitement. Il est donc nécessaire d'optimiser la durée des échanges et l'ordonnancement des calculs pour respecter la contrainte temporelle de l'unité de traitement.

*Exemple de mise en œuvre du fonctionnement dégradé du dispositif de commande selon un mode de réalisation préféré de l'invention*

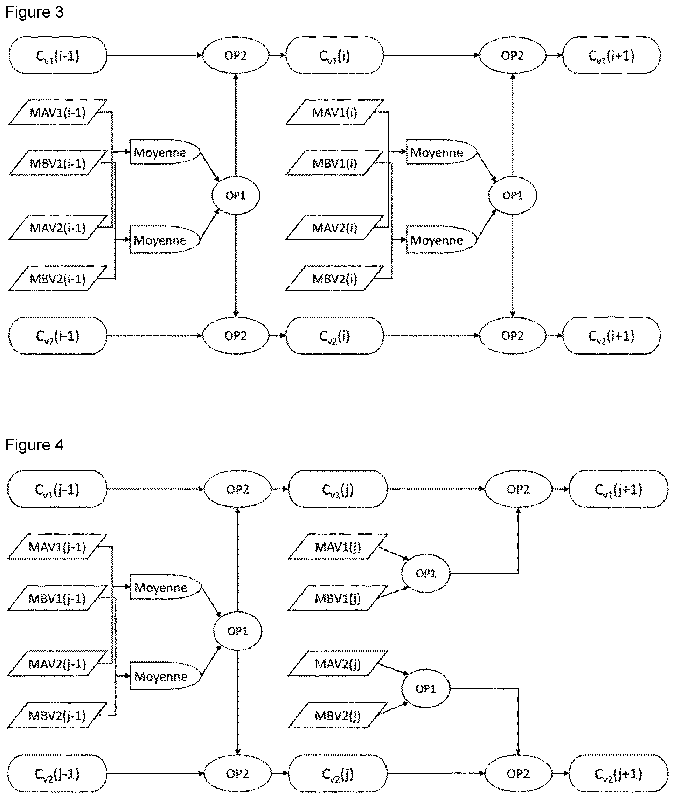

Un tel exemple est illustré sur les figures 3 à 5. L'exemple présenté est celui d'un calcul prenant en compte uniquement un résultat au pas de temps précédent (

$$t = i - 1$$

dans cet exemple, il est admis que

$$C_{V1}(0) = C_{V2}(0)$$

. Tant que le système ne subit pas de panne de la liaison inter-voie, les calculs se déroulent tel qu'illustré sur la figure 3. En outre, dans cet exemple, la voie V1 est la voie active tandis que la voie V2 est la voie passive.

Pour déterminer la commande à appliquer à l'actionneur ACT à un pas de temps $t = i$ des calculs sont réalisés à partir des données mesurées par les capteurs associés aux voies de commande. Dans un exemple simplifié, les calculs suivants sont réalisés :

$$C_{V1}(i) = C_{V1}(i-1) + moyenne(i)$$

$$C_{V2}(i) = C_{V2}(i-1) + moyenne(i)$$

avec:

$$moyenne(i) = \frac{\big(MAV1(i) + MAV2(i)\big)}{2} + \frac{\big(MBV1(i) + MBV2(i)\big)}{2}$$

Ce qui correspond à la figure 2 dans laquelle les opérateurs OP1, OP2 sont par exemple des sommes des deux termes pris en entrée. D'autres opérateurs peuvent aussi être envisagés.

Il est ici évident qu'après les calculs décrit précédemment, dans le cadre d'un régime de fonctionnement nominal, si l'on admet qu'au pas calcul précédent on a bien :

$$C_{V1}(i) = C_{V2}(i)$$

, alors au pas de calcul courant, l'égalité suivante est bien vérifiée :

$$C_{V1}(i+1) = C_{V2}(i+1)$$

En revanche, lorsqu'une coupure survient sur la liaison de communication inter-voie à un instant *j* les unités de consolidations ne sont plus en mesure d'échanger les données mesurées par les capteurs reliés à leurs voies respectives. Les calculs réalisés par l'unité de traitement se déroulent alors tel que représenté dans la **figure 4** : chacune des deux voies réalise les calculs présentés précédemment sans l'étape de consolidation (ici la moyenne). L'unité de traitement réalise donc les calculs suivants :

$$C_{V1}(j) = C_{V1}(j-1) + MAV1(j) + MBV1(j)$$

$$C_{V2}(j) = C_{V2}(j-1) + MAV2(j) + MBV2(j)$$

Cependant, les données de même nature mesurées par les capteurs de chacune des deux voies sont en pratique toujours différentes (c'est pourquoi la consolidation est nécessaire). On a donc :

$$MAV1(j) + MBV1(j) \neq MAV2(j) + MBV2(j)$$

Et dans ce cas les commandes calculées par les deux voies ne sont plus identiques :

$$C_{V1}(j) \neq C_{V2}(j)$$

Cette divergence des commandes calculées est détectée comme une erreur par les unités de surveillance. De plus, même si la liaison est rétablie, les calculs précédents étant différents après traitement, les commandes calculées resteront différentes d'une voie à l'autre.

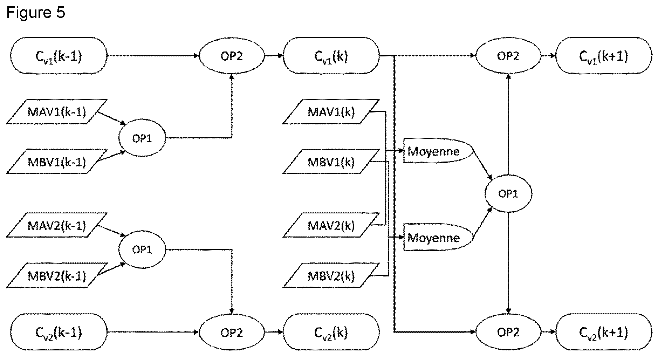

Afin de pallier ce problème, la solution consiste à envoyer les résultats calculés par la voie active (dans cet exemple la voie V1) vers la voie passive (dans cet exemple la voie V2) lorsque la liaison est rétablie à un instant *k* tel que représenté dans la figure 5. Les calculs ici réalisés sont les suivants :

$$C_{V1}(k+1) = \boldsymbol{C_{V1}(k)} + moyenne(k+1)$$

$$C_{V2}(k+1) = \boldsymbol{C_{V1}(k)} + moyenne(k+1)$$

De ce fait :

$$C_{V1}(k+1) = C_{V2}(k+1)$$

On constate, que les valeurs des commandes $C_{V1}$, $C_{V2}$ sont identiques au rétablissement de la liaison de communication LCOM inter-voies.

*Exemple d'implémentation possible*

A titre d'exemple les unités de traitement de chacune des deux voies peuvent être scindées en deux modules MOD1, MOD2 comme illustré sur la figure 2. Dans ce cas, les calculs réalisés reposent sur plusieurs résultats précédents. Plus précisément, les calculs réalisés utilisent les résultats des 4 commandes précédentes ainsi que des résultats intermédiaires venant des 3 instants de calculs précédents. Dans un tel cas, il est donc nécessaire d'échanger les commandes calculées pendant plusieurs instants de calcul, afin d'optimiser au maximum la durée de ces échanges qui sont coûteux en temps de calcul, ceux-ci doivent être réalisés pendant une durée la plus courte possible :

- lorsqu'une ou plusieurs commandes précédentes sont utilisées en entrée des unités de traitement avec un temps de retard
  $r_1$ , mesuré en nombre d'instants de calcul, les commandes doivent être transmises de la voie active vers la voie passive pendant un nombre d'instants de calcul équivalent à la durée de la coupure de la liaison ;
- lorsqu'un ou plusieurs résultats intermédiaires précédents sont utilisés avec un retard
  $r_2$ les commandes doivent être transmises de la voie active vers la voie passive pendant
  $r_2$ pas de calculs.

De plus, afin de satisfaire aux exigences de système temps réel propres à tout dispositif de pilotage embarqué, la durée de chaque cycle ne peut dépasser une durée prédéterminée, par exemple 15ms, dès lors, il est nécessaire d'optimiser l'ordre des opérations ajoutées afin de continuer à respecter cette contrainte. Pour cela, l'ordonnancement des taches réalisées par les unités de traitement est modifié afin de réaliser des calculs lorsque celles-ci sont en attente de la réception de données sur une liaison de données. De cette manière du temps de calcul est libéré :

- En mode de fonctionnement nominal, en l'absence de panne ;
- En mode de fonctionnement dégradé, lors de la panne de communication ;
- En mode de fonctionnement dégradé, après le retour de la liaison inter-voie, lors de l'échange de données depuis la voie active vers la voie passive.

Ce temps de calcul libéré permet ainsi de respecter les contraintes de temps imposées ainsi que de réaliser des autotests supplémentaires afin de déceler un disfonctionnement d'un composant d'une des deux voies.

## Revendications

1. Procédé de commande d'un moteur commandé par un dispositif de commande, le dispositif de commande comprenant une première voie de commande (V1) et une deuxième voie de commande (V2), chaque voie de commande comprenant un premier capteur (CAV1, CAV2) et un second capteur (CBV1, CBV2) chacun configuré pour fournir respectivement une première mesure (A) et une deuxième mesure (B) à chaque voie, chacune des voies comprenant un état actif ou passif définissant une voie active (V1) ou une voie passive(V2), la voie active (V1) étant destinée à piloter un actionneur (ACT) du moteur tandis que la voie passive (V2) est destinée à prendre le relais sur la voie active en cas de défaillance de cette dernière, chaque voie (V1, V2) comprenant :

   - une unité de consolidation (UC1, UC2) des mesures, chacune recevant en entrée les mesures issues des deux voies par l'intermédiaire d'au moins une liaison de communication inter-voie (LCOM) de manière à obtenir un paramètre de consolidation,
   - une unité de traitement (UT1, UT2) d'une commande ($C_{V1}$, $C_{V2}$) de l'actionneur du moteur (ACT),

   le procédé étant **caractérisé en ce qu'**il comprend:

   - au cours d'un mode de fonctionnement nominal du dispositif de commande, une étape mise en œuvre par l'unité de traitement de la voie active (UT1) comprenant un calcul de la commande de la voie active ($C_{V1}$) en fonction du paramètre de consolidation et de la commande de la voie active ($C_{V1}$) calculée à l'instant de calcul précédent, l'actionneur étant piloté par la voie active (V1), et une étape mise en œuvre par l'unité de traitement de la voie passive (UT2) comprenant un calcul de la commande de la voie passive ($C_{V2}$) en fonction du paramètre de consolidation et de la commande de la voie passive ($C_{V2}$) calculée à l'instant de calcul précédent,

- au cours d'un mode de fonctionnement dégradé du dispositif de commande, une étape mise en œuvre par l'unité de traitement de la voie passive (UT2) lorsque l'au moins une liaison de communication inter-voies (LCOM) est rétablie après une coupure de l'au moins une liaison de communication inter-voies (LCOM), comprenant un calcul de la commande de la voie passive ($C_{V2}$) en fonction de la commande de la voie active ($C_{V1}$) calculée par la voie active (V1) à l'instant de calcul précédent.

2. Procédé selon la revendication 1, comprenant une détection d'une différence de la valeur de la commande ($C_{V1}$, $C_{V2}$) calculée par les deux voies (V1, V2) par une unité de surveillance (US1, US2) de chaque voie (V1, V2).

3. Procédé selon la revendication 2, comprenant une désactivation temporaire ou définitive de la voie passive (V2) par l'unité de surveillance (US1, US2) des processus, dans le cas où une différence de la valeur de la commande ($C_{V1}$, $C_{V2}$) calculée par les deux voies (V1, V2) est détectée.

4. Procédé selon l'une des revendications précédentes, comprenant le calcul d'une moyenne des valeurs mesurées par les deux voies (V1, V2) par l'unité de consolidation (UC1, UC2).

5. Procédé selon l'une des revendications précédentes, comprenant un calcul par l'unité de traitement (UT1, UT2) de chaque voie (V1,V2) nécessitant au moins un résultat calculé par elle-même à un pas de temps antérieur.

6. Procédé selon l'une des revendications précédentes, comprenant un calcul par l'unité de traitement (UT1, UT2) de chaque voie (V1,V2) nécessitant au moins un résultat intermédiaire calculé par elle-même à un pas de calcul antérieur.

7. Procédé selon la revendication 5, dans lequel le mode de fonctionnement dégradé est activé pendant une durée correspondant à la durée de la coupure de l'au moins une liaison de communication inter-voie (LCOM).

8. Procédé selon la revendication 6, dans lequel le mode de fonctionnement dégradé est activé pendant une durée correspondant au temps entre le calcul d'une valeur intermédiaire et l'instant de temps le plus éloigné durant lequel un calcul utilise cette valeur comme donnée initiale.

9. Procédé selon l'une des revendications 1 à 6, dans lequel le mode de fonctionnement dégradé est activé pendant une durée prédéterminée, estimée par des tests de panne de liaison de communication.

10. Procédé selon l'une des revendications 2 à 9, comprenant une désactivation définitive de la voie passive (V2) par l'unité de surveillance (US1, US2) des processus dans le cas où une différence dans la valeur de la commande calculée par les deux voies (V1, V2) est détectée immédiatement après la fin du mode de fonctionnement dégradé.

11. Procédé selon l'une des revendications précédentes, dans lequel lorsque l'une des deux voies (V1, V2) attend de recevoir des mesures provenant de l'autre voie, ladite autre voie (V1, V2) réalise à l'avance les prochains calculs prévus ne nécessitant pas de mesure provenant de la seconde voie dont elle ne dispose pas à cet instant.

**Patentansprüche**

1. Verfahren zur Steuerung eines Motors, der von einer Steuervorrichtung gesteuert wird, wobei die Steuervorrichtung einen ersten Steuerkanal (V1) und einen zweiten Steuerkanal (V2) umfasst, wobei jeder Steuerkanal einen ersten Sensor (CAV1, CAV2) und einen zweiten Sensor (CBV1, CBV2) umfasst, die jeweils ausgelegt sind, um jeweils eine erste Messung (A) und eine zweite Messung (B) an jeden Kanal zu liefern, wobei jeder der Kanäle einen aktiven oder passiven Zustand umfasst, der einen aktiven Kanal (V1) oder einen passiven Kanal (V2) definiert, wobei der aktive Kanal (V1) dazu bestimmt ist, einen Aktuator (ACT) des Motors zu steuern, während der passive Kanal (V2) dazu bestimmt ist, den aktiven Kanal bei dessen Ausfall zu übernehmen, wobei jeder Kanal (V1, V2) umfasst:

- eine Konsolidierungseinheit (UC1, UC2) der Messungen, wobei jede eingangs die von den beiden Kanälen stammenden Messungen über mindestens eine kanalübergreifende Kommunikationsverbindung (LCOM) empfängt, so dass ein Konsolidierungsparameter erhalten wird,

- eine Verarbeitungseinheit (UT1, UT2) für eine Steuerung ($C_{V1}$, $C_{V2}$) des Aktuators des Motors (ACT),

wobei das Verfahren **dadurch gekennzeichnet ist, dass** es umfasst:

- während eines nominalen Betriebsmodus der Steuervorrichtung einen Schritt der Umsetzung des aktiven Kanals durch die Verarbeitungseinheit (UT1), umfassend eine Berechnung der Steuerung des aktiven Kanals ($C_{V1}$) in Abhängigkeit von dem Konsolidierungsparameter und der zum vorherigen Berechnungszeitpunkt berechneten Steuerung des aktiven Kanals ($C_{V1}$), wobei der Aktuator vom aktiven Kanal (V1) gesteuert wird, und einen Schritt der Umsetzung des passiven Kanals durch die Verarbeitungseinheit (UT2), umfassend eine Berechnung der Steuerung des passiven Kanals ($C_{V2}$) in Abhängigkeit von dem Konsolidierungsparameter und der zum vorherigen Berechnungszeitpunkt berechneten Steuerung des passiven Kanals ($C_{V2}$),
- während eines eingeschränkten Betriebsmodus der Steuervorrichtung einen Schritt der Umsetzung des passiven Kanals durch die Verarbeitungseinheit (UT2), wenn die mindestens eine kanalübergreifende Kommunikationsverbindung (LCOM) nach einer Unterbrechung der mindestens einen kanalübergreifenden Kommunikationsverbindung (LCOM) wiederhergestellt ist, umfassend eine Berechnung der Steuerung des passiven Kanals ($C_{V2}$) in Abhängigkeit von der vom aktiven Kanal (V1) zum vorherigen Berechnungszeitpunkt berechneten Steuerung des aktiven Kanals ($C_{V1}$).

2. Verfahren nach Anspruch 1, umfassend eine Erfassung einer Differenz des von den beiden Kanälen (V1, V2) berechneten Wertes der Steuerung ($C_{V1}$, $C_{V2}$) durch eine Überwachungseinheit (US1, US2) jedes Kanals (V1, V2).

3. Verfahren nach Anspruch 2, umfassend eine vorübergehende oder dauerhafte Deaktivierung des passiven Kanals (V2) durch die Überwachungseinheit (US1, US2) der Prozesse, falls eine Differenz des von den beiden Kanälen (V1, V2) berechneten Wertes der Steuerung ($C_{V1}$, $C_{V2}$) erfasst wird.

4. Verfahren nach einem der vorhergehenden Ansprüche, umfassend die Berechnung eines Mittelwerts der von den beiden Kanälen (V1, V2) von der Konsolidierungseinheit (UC1, UC2) gemessenen Werte.

5. Verfahren nach einem der vorhergehenden Ansprüche, umfassend eine Berechnung jedes Kanals (V1, V2) durch die Verarbeitungseinheit (UT1, UT2), die mindestens ein zu einem früheren Zeitschritt von ihr selbst berechnetes Ergebnis benötigt.

6. Verfahren nach einem der vorhergehenden Ansprüche, umfassend eine Berechnung jedes Kanals (V1, V2) durch die Verarbeitungseinheit (UT1, UT2), die mindestens ein zu einem früheren Berechnungsschritt von ihr selbst berechnetes Zwischenergebnis benötigt.

7. Verfahren nach Anspruch 5, wobei der eingeschränkte Betriebsmodus für eine Dauer aktiviert ist, die der Dauer der Unterbrechung der mindestens einen kanalübergreifenden Kommunikationsverbindung (LCOM) entspricht.

8. Verfahren nach Anspruch 6, wobei der eingeschränkte Betriebsmodus für eine Dauer aktiviert ist, die der Zeit zwischen der Berechnung eines Zwischenwerts und dem am weitesten entfernten Zeitpunkt entspricht, zu dem eine Berechnung diesen Wert als Anfangsangabe verwendet.

9. Verfahren nach einem der Ansprüche 1 bis 6, wobei der eingeschränkte Betriebsmodus für eine vorbestimmte Zeitdauer aktiviert ist, die durch Ausfalltests der Kommunikationsverbindung geschätzt wird.

10. Verfahren nach einem der Ansprüche 2 bis 9, umfassend eine dauerhafte Deaktivierung des passiven Kanals (V2) durch die Prozessüberwachungseinheit (US1, US2), falls eine Differenz im von den beiden Kanälen (V1, V2) berechneten Wertes der Steuerung unmittelbar nach dem Ende des eingeschränkten Betriebsmodus erfasst wird.

11. Verfahren nach einem der vorhergehenden Ansprüche, wobei, wenn einer der beiden Kanäle (V1, V2) darauf wartet, Messungen vom anderen Kanal zu erhalten, der andere Kanal (V1, V2) im Voraus die nächsten geplanten Berechnungen durchführt, die keine Messungen vom zweiten Kanal benötigten, über die er zu diesem Zeitpunkt nicht verfügt.

**Claims**

1. Method for controlling an engine controlled by a control device, the control device comprising a first control channel (V1) and a second control channel (V2), each control channel comprising a first sensor (CAV1, CAV2) and a second sensor (CBV1, CBV2) each configured to provide respectively a first measurement (A) and a second measurement (B) to each channel, each of the channels comprising an active or passive state defining an active channel (V1) or a passive channel (V2), the active channel (V1) being intended to drive an actuator (ACT) of the engine while the passive channel (V2) is intended to take over on the active channel in the event of failure of the latter, each channel (V1, V2) comprising :

   - a measurement consolidation unit (UC1, UC2), each receiving as input the measurements from the two channels via at least one inter-channel communication link (LCOM) so as to obtain a consolidation parameter,
   - a processing unit (UT1, UT2) for a command ($C_{V1}$, $C_{V2}$) of the actuator of the engine (ACT),

   the method being **characterised in that** it comprises :

   - during a nominal operating mode of the control device, a step implemented by the processing unit of the active channel (UT1) comprising a calculation of the command of the active channel ($C_{V1}$) as a function of the consolidation parameter and of the command of the active channel ($C_{V1}$) calculated by the processing unit of the active channel (UT1) at the previous calculation instant, the actuator being controlled by the active channel (V1), and a step implemented by the processing unit of the passive channel (UT2) comprising a calculation of the command of the passive channel ($C_{V2}$) calculated by the processing unit of the passive channel (UT2) at the preceding calculation instant, and
   - during a degraded operating mode of the control device, a step implemented by the processing unit of the passive channel (UT2) when the at least one inter-channel communication link (LCOM) is re-established after a cut in the at least one inter-channel communication link (LCOM), comprising a calculation of the command of the passive channel ($C_{V2}$) as a function of the command of the active channel ($C_{V1}$) calculated by the active channel (V1) at the preceding calculation instant.

2. Method according to claim 1, comprising detection of a difference in the value of the command ($C_{V2}$, $C_{V1}$) calculated by the two channels (V1, V2) by a process-monitoring unit (US1, US2) of each channel (V1, V2).

3. Method according to claim 2, comprising temporary or definitive deactivation of the passive channel (V2) by the process-monitoring unit (US1, US2), in the event that a difference in the value of the command ($C_{V1}$, $C_{V2}$) calculated by the two channels (V1, V2) is detected.

4. Method according to one of the preceding claims, comprising the calculation of an average of the values measured by the two channels (V1, V2) by the consolidation unit (UC1, UC2).

5. Method according to one of the preceding claims, comprising a calculation by the processing unit (UT1, UT2) of each channel (V1, V2) requiring at least one result calculated by itself at a previous time step.

6. Method according to one of the preceding claims, comprising a calculation by the processing unit (UT1, UT2) of each channel (V1, V2) requiring at least one intermediate result calculated by itself at a previous calculation step.

7. Method according to claim 5, wherein the degraded operating mode is activated for a duration corresponding to the duration of the interruption of the at least one inter-channel communication link (LCOM).

8. Method according to claim 6, in which the degraded operating mode is activated for a duration corresponding to the time between the calculation of an intermediate value and the furthest instant of time during which a calculation uses this value as initial data.

9. A method according to any of claims 1 to 6, wherein the degraded operating mode is activated for a predetermined duration, estimated by communication link failure tests.

10. Method according to one of claims 2 to 9, comprising definitive deactivation of the passive channel (V2) by the process-monitoring unit (US1, US2) in the event that a difference in the value of the command calculated by the two channels (V1, V2) is detected immediately after the end of the degraded operating mode.

11. Method according to one of the preceding claims, in which when one of the two channels (V1, V2) is waiting to receive measurements from the other channel, the said other channel (V1, V2) performs in advance the next planned calculations not requiring measurements from the second channel which it does not have at this moment.

Figure 1

Figure 2

Figure 3

Figure 4

Figure 5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2986398 A1